(19) Europäisches Patentamt / European Patent Office / Office européen des brevets

(11) **EP 4 657 582 A1**

(12) **EUROPEAN PATENT APPLICATION**
published in accordance with Art. 153(4) EPC

(43) Date of publication:
**03.12.2025  Bulletin 2025/49**

(21) Application number: **24854415.7**

(22) Date of filing: **09.08.2024**

(51) International Patent Classification (IPC):
$H01M\ 10/052^{(2010.01)}$     $H01M\ 4/525^{(2010.01)}$
$H01M\ 4/48^{(2010.01)}$        $H01M\ 4/587^{(2010.01)}$
$H01M\ 4/131^{(2010.01)}$      $H01M\ 4/38^{(2006.01)}$
$H01M\ 4/02^{(2006.01)}$

(52) Cooperative Patent Classification (CPC):
H01M 4/02; H01M 4/131; H01M 4/38; H01M 4/48;
H01M 4/525; H01M 4/587; H01M 10/052;
Y02E 60/10

(86) International application number:
**PCT/KR2024/011906**

(87) International publication number:
**WO 2025/037864 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **11.08.2023  KR 20230105599**

(71) Applicant: **LG Energy Solution, Ltd.**
**Seoul 07335 (KR)**

(72) Inventors:
• **HEO, Bumgi**
  **Daejeon 34122 (KR)**
• **SHIN, Sun Young**
  **Daejeon 34122 (KR)**
• **LEE, Sang Wook**
  **Daejeon 34122 (KR)**
• **LEE, Yong Ju**
  **Daejeon 34122 (KR)**

(74) Representative: **Hoffmann Eitle**
**Patent- und Rechtsanwälte PartmbB**
**Arabellastraße 30**
**81925 München (DE)**

(54) **LITHIUM SECONDARY BATTERY, BATTERY MODULE, AND BATTERY PACK**

(57)    The present invention relates to a lithium secondary battery, a battery module, and a battery pack. The lithium secondary battery comprises: a positive electrode including a positive electrode active material; a negative electrode including a negative electrode active material; a separator disposed between the positive electrode and the negative electrode; and an electrolyte, wherein the positive electrode active material includes a lithium composite transition metal compound containing nickel (Ni), cobalt (Co), and manganese (Mn), the lithium composite transition metal compound contains single particles, the negative electrode active material includes a silicon oxide, and the grain size of Si in the silicon oxide is at most 10% of the grain size of the lithium composite transition metal compound.

EP 4 657 582 A1

**Description**

[Technical Field]

This application claims priority to and the benefit of Korean Patent Application No. 10-2023-0105599 filed in the Korean Intellectual Property Office on August 11, 2023, the entire contents of which are incorporated herein by reference.

The present invention relates to a lithium secondary battery, a battery module, and a battery pack.

[Background Art]

Recently, with the rapid spread of electronic devices using batteries, such as mobile phones, laptop computers, electric vehicles, electrically-powered tools and cleaners, the demand for small, lightweight, and relatively high-capacity and/or high-output secondary batteries is rapidly increasing. In particular, a lithium secondary battery is in the limelight as a driving power source for electronic devices because it is lightweight and has a high energy density. Accordingly, research and development efforts to improve the performance of the lithium secondary battery are being actively conducted.

In the lithium secondary battery, in a state in which an organic electrolyte solution or a polymer electrolyte solution is filled between a positive electrode and a negative electrode each made of an active material capable of intercalation and deintercalation of lithium ions, electrical energy is produced by oxidation/reduction reactions at a time when lithium ions are intercalated/deintercalated into/from the positive electrode and the negative electrode.

Lithium cobalt oxide ($LiCoO_2$), lithium nickel oxide ($LiNiO_2$), lithium manganese oxide ($LiMnO_2$ or $LiMn_2O_4$, etc.), a lithium iron phosphate compound ($LiFePO_4$) or the like has been used as a positive electrode active material of the lithium secondary battery. Among these materials, since the lithium cobalt oxide ($LiCoO_2$) is advantageous in that its operating voltage is high and capacity characteristics are excellent, the lithium cobalt oxide ($LiCoO_2$) is widely used and is applied as a positive electrode active material for high voltage. However, since there is a limitation in using a large amount of the lithium cobalt oxide as a power source for applications, such as electric vehicles, due to the rising price and unstable supply of cobalt (Co), there emerges a need to develop a positive electrode active material capable of replacing the lithium cobalt oxide.

Accordingly, a nickel cobalt manganese-based lithium composite transition metal compound (hereinafter, simply referred to as 'NCM-based lithium composite transition metal compound'), in which a portion of cobalt (Co) is substituted with nickel (Ni) and manganese (Mn), has been developed. Recently, research is being conducted to increase the capacity by increasing a content of Ni in the NCM-based lithium composite transition metal compound. However, in the case of a Ni-rich positive electrode active material having a high nickel content, there are disadvantages such as a deterioration in thermal stability, an increase in resistance due to an increase in side reactions during an electrochemical reaction, and an increase in gas generation.

Note that graphite is mainly used as a negative electrode active material of the lithium secondary battery. However, graphite has a low capacity per unit mass of 372 mAh/g, making it difficult to increase the capacity of the lithium secondary battery. Accordingly, in order to increase the capacity of the lithium secondary battery, negative electrode materials such as silicon, tin, and oxides thereof are being developed as non-carbon-based negative electrode materials having higher energy densities than graphite. Although such non-carbon-based negative electrode materials have the high capacity, but the initial efficiency is low. Therefore, there are problems in that lithium consumption during initial charging and discharging is high and irreversible capacity loss is large.

Additionally, a lithium secondary battery has a size required depending on its application, and accordingly, should be designed in a limited space. Consumer demands for increased energy density and improved high-output performance are increasing, but when a positive electrode material with high capacity is used, a content of the negative electrode material should be correspondingly increased to adapt to the positive electrode material. Accordingly, there is a limit to increasing battery efficiency in a limited space. Accordingly, there is a need to develop batteries with improved performance, such as efficiency and life, within a limited space.

Citation List

Patent Literature

(Patent Literature 1) Korean Patent Application Publication No. 10-2011-0112215

[Detailed Description of the Invention]

[Technical Problem]

The present inventors have found that optimal battery performance can be implemented in a lithium secondary battery designed in a limited space through a specific combination obtained by adjusting a crystal grain size of a positive electrode active material and a Si crystal grain size of a negative electrode active material, resulting in the present invention.

The present invention relates to a lithium secondary battery, a battery module, and a battery pack.

[Technical Solution]

An exemplary embodiment of the present invention provides a lithium secondary battery including: a positive electrode including a positive electrode active material; a negative electrode including a negative electrode active material; a separator provided between the positive electrode and the negative electrode; and an electrolyte, wherein the positive electrode active material includes a lithium composite transition metal compound including nickel (Ni), cobalt (Co), and manganese (Mn), the lithium composite transition metal compound includes single particles, the negative electrode active material includes a silicon oxide, and a Si crystal grain size of the silicon oxide is 10% or less of a crystal grain size of the lithium composite transition metal compound.

An exemplary embodiment of the present invention provides a battery module including the lithium secondary battery described above.

An exemplary embodiment of the present invention provides a battery pack including the lithium secondary battery described above.

An exemplary embodiment of the present invention provides a battery pack including the battery module described above.

[Advantageous Effects]

According to a lithium secondary battery of an exemplary embodiment of the present invention, a Si crystal grain size of a silicon oxide included in a negative electrode active material is 10% or less of a crystal grain size of a lithium composite transition metal compound included in a positive electrode active material, and when the above crystal grain size is satisfied, cycle characteristics can be improved and swelling can be reduced. Therefore, by controlling the crystal grains of the lithium composite transition metal compound and the Si crystal grains of the negative electrode active material as described above, the rapid charging performance, efficiency, life, and/or energy density of a lithium secondary battery designed in a limited space can be easily improved.

[Best Mode]

Hereinafter, the present specification will be described in more detail.

In the present specification, when a part is referred to as "including" a certain component, it means that the part can further include another component, not excluding another component, unless explicitly described to the contrary.

Throughout the present specification, when a member is referred to as being "on" another member, the member can be in direct contact with another member or an intervening member may also be present.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms "a", "an" and "the" are intended to include the plural forms as well, unless the context clearly indicates otherwise.

In the present specification, the "single particle" is a term used to distinguish the same from a positive electrode active material particle in the form of a secondary particle resulting from agglomeration of tens to hundreds of primary particles, and refers to both a single particle consisting of one primary particle and a quasi-single particle form that is an agglomerate of 30 or less primary particles.

In the present specification, the average particle diameter ($D_{50}$) may be defined as a particle diameter corresponding to 50% of the cumulative volume on the particle size distribution curve of the particles (graph curve of the particle size distribution). The average particle diameter may be measured using, for example, a laser diffraction method. In the laser diffraction method, in general, particle diameters ranging from a submicron region to several millimeters can be measured, and results with high reproducibility and high resolvability can be obtained.

The measurement of the average particle diameter may be confirmed using water and Triton-X100 dispersant with a Microtrac apparatus (manufacturer: Microtrac model name: S3500). Specifically, the average particle diameter of a positive electrode active material may be measured under a condition of a refractive index of 1.5 to 1.7, and the average particle diameter of a negative electrode active material may be measured under a condition of a refractive index of 1.97 or 2.42. For example, after dispersing particles in a dispersion medium, the resulting dispersion is introduced into a commercially available laser diffraction particle size measuring device and irradiated with an ultrasonic wave of about 28 kHz with an output of 60 W. Thereafter, a cumulative volume particle size distribution graph is obtained, and then the average particle diameter may be measured by obtaining the particle size corresponding to 50% of the cumulative volume.

Hereinafter, preferred embodiments of the present invention will be described in detail. However, it should be understood that the exemplary embodiments of the present invention may be modified in various forms and the scope of the present invention is not limited to the exemplary embodiments described below.

An exemplary embodiment of the present invention provides a lithium secondary battery including: a positive electrode including a positive electrode active material; a negative electrode including a negative electrode active material; a separator provided between the positive electrode and the negative electrode; and an electrolyte, wherein the positive electrode active material includes a lithium composite transition metal compound including nickel (Ni), cobalt (Co), and manganese (Mn), the lithium composite transition metal compound includes single particles, the negative electrode active material includes a silicon oxide, and a Si crystal grain size of the silicon oxide is 10% or less of a crystal grain size of the lithium composite transition metal compound.

In general, a lithium secondary battery has a size required depending on its application, and accordingly, should be designed in a limited space. Consumer demands for increased energy density and improved high-output performance are increasing, but when a positive electrode material with high capacity is used, a content of the negative electrode material should be correspondingly increased to adapt to the positive electrode material. Accordingly, there is a limit to increasing battery efficiency in a limited space. In addition, it is necessary to design a positive electrode material having efficiency adapted to the efficiency of the negative electrode material, depending on the type of negative electrode material.

A lithium secondary battery according to the present invention has a feature that a Si crystal grain size of the silicon oxide included in the negative electrode active material is 10% or less of a crystal grain size of the lithium composite transition metal compound included in the positive electrode active material. Due to the material properties of silicon oxide, the larger the crystal grain size, the more lithium (Li) remains in the material, which can lead to greater cycle performance degradation and increased swelling. The present inventors have found that the aforementioned cycle performance degradation and degree of swelling can be reduced by controlling the crystal grain size of the positive electrode active material to be within a specific range with respect to the crystal grain size of the silicon oxide. Specifically, the intercalation of Li into the silicon oxide of the negative electrode is accompanied by amorphization of the crystalline silicon oxide. Therefore, the larger the crystal grain size of silicon oxide, the greater the resistance during the intercalation and deintercalation of lithium, leading to degraded cycle performance and increased swelling. In contrast, for positive electrode active materials, the higher the crystallinity, the less the structure changes even with repeated intercalation and deintercalation of Li, allowing the diffusion path of lithium to be stably maintained. When the crystal grain size of the positive electrode active material is larger than the crystal grain size of the silicon oxide within the aforementioned range, a relatively stable crystal structure is maintained, allowing an electrochemical reaction to occur easily even with a small amount of lithium (Li), thereby preventing a relative decrease in capacity and swelling. In addition, when the Si crystal grain size of the silicon oxide falls within the aforementioned range, the stress caused by the volume expansion of the negative electrode active material particles during charging and discharging can be reduced, thereby preventing breakage of the particles, leading to improved cycle characteristics and reduced swelling. Therefore, by controlling the crystal grains of the lithium composite transition metal compound and the Si crystal grains of the negative electrode active material as described above, the rapid charging performance, efficiency, life, and/or energy density of a lithium secondary battery designed in a limited space can be easily improved.

According to an exemplary embodiment of the present invention, the silicon oxide may include $SiO_x$ ($0 \leq x < 2$).

The active material including $SiO_x$ ($0 \leq x < 2$) may be a silicon oxide particle including $SiO_x$ ($0 < x < 2$) and a pore.

The $SiO_x$ ($0 < x < 2$) corresponds to a matrix in the silicon oxide particle. The $SiO_x$ ($0 < x < 2$) may be a form of including Si and $SiO_2$, and the Si may form a phase. That is, x corresponds to a ratio of the number of O to Si included in the $SiO_x$ ($0 < x < 2$). When the silicon oxide particles include the $SiO_x$ ($0 < x < 2$), a discharge capacity of a secondary battery can be improved.

The silicon oxide particle may further include at least one of a Mg compound and a Li compound. The Mg compound and the Li compound may correspond to a dopant in the silicon oxide particle.

The Mg compound and/or the Li compound may be present in the $SiO_x$ ($0 < x < 2$) and/or on a surface of the $SiO_x$ ($0 < x < 2$). The initial efficiency of the battery can be improved by the Mg compound and/or the Li compound.

The Mg compound may include at least one selected from the group consisting of Mg silicate, Mg silicide, and Mg oxide. The Mg silicate may include at least one of $Mg_2SiO_4$ and $MgSiO_3$. The Mg silicide may include $Mg_2Si$. The Mg oxide may include MgO.

In an exemplary embodiment of the present specification, the Mg element may be included in an amount of 0.1 to 20 wt% or 0.1 to 10 wt% based on 100 wt% of a total of the silicon oxide particles. Specifically, the Mg element may be included in an amount of 0.5 to 8 wt% or 0.8 to 4 wt%. When the above range is satisfied, the Mg compound can be included in an appropriate content in the silicon oxide particles, so the volume change of the silicon oxide particles during charging and discharging of the battery can be easily suppressed, and the discharge capacity and initial efficiency of the battery can be improved.

The Li compound may include at least one selected from the group consisting of Li silicate, Li silicide, and Li oxide. The Li silicate may include at least one of $Li_2SiO_3$, $Li_4SiO_4$ and $Li_2Si_2O_5$. The Li silicide may include $Li_7Si_2$. The Li oxide may include $Li_2O$.

In an exemplary embodiment of the present invention, the Li compound may include a form of lithium silicate. The lithium silicate is represented by $Li_aSi_bO_c$ ($2 \leq a \leq 4$, $0 < b \leq 2$, $2 \leq c \leq 5$) and may be divided into crystalline lithium silicate and amorphous lithium silicate. The crystalline lithium silicate may be present in the silicon oxide particle in a form of at least one lithium silicate selected from the group consisting of $Li_2SiO_3$, $Li_4SiO_4$, and $Li_2Si_2O_5$, and the amorphous lithium silicate may be in a form of $Li_aSi_bO_c$ ($2 \leq a \leq 4$, $0 < b \leq 2$, $2 \leq c \leq 5$). However, no such limitation is intended.

In an exemplary embodiment of the present specification, the Li element may be included in an amount of 0.1 to 20 wt% or 0.1 to 10 wt% based on 100 wt% of the total silicon oxide particles. Specifically, the Li element may be included in an amount of 0.5 to 8 wt%, and more specifically, 0.5 to 4 wt%. When the above range is satisfied, the Li compound can be included in an appropriate content in the silicon oxide particles, so the volume change of the negative electrode active material during charging and discharging of the battery can be easily suppressed, and the discharge capacity and initial efficiency of the battery can be improved.

The content of the Mg element or Li element can be confirmed through ICP analysis. For the ICP analysis, a predetermined amount (about 0.01 g) of a negative electrode active material is precisely aliquoted, transferred to a platinum crucible, and completely decomposed on a hot plate by adding nitric acid, hydrofluoric acid and sulfuric acid thereto. Then, by using an inductively coupled plasma atomic emission spectrometer (ICP-AES, Perkin-Elmer 7300), a reference calibration curve is obtained by measuring the intensity of a standard liquid, which has been prepared using a standard solution (5 mg/kg), at an intrinsic wavelength of the Mg element or Li element. Subsequently, a pre-treated sample solution and a blank sample are introduced into the spectrometer, and by measuring the intensity of each component to calculate an actual intensity, calculating the concentration of each component based on the obtained calibration curve, and then performing a conversion such that the sum of the calculated concentrations of the components is equal to a theoretical value, the Mg element or Li element content in the prepared silicon oxide particles can be analyzed.

In an exemplary embodiment of the present invention, the silicon oxide may include a further metal atom. The metal atom may be present in the form of at least one of a metal atom, a metal silicate, a metal silicide and a metal oxide in the silicon oxide. The metal atom may include at least one selected from the group consisting of Mg, Li, Al and Ca. Accordingly, initial efficiency of the negative electrode active material may be improved.

In an exemplary embodiment of the present invention, a carbon layer is provided on at least a portion of a surface of the silicon oxide. In this case, the carbon layer may be coated on at least a portion of the surface, i.e., may be partially coated on the surface of the particle, or may be coated on the entire surface of the particle. Conductivity is imparted to the negative electrode active material by the carbon layer, so that the initial efficiency, life characteristics, and battery capacity characteristics of a secondary battery can be improved.

In an exemplary embodiment of the present invention, the carbon layer includes amorphous carbon. Further, the carbon layer may further include crystalline carbon.

The crystalline carbon may further improve conductivity of the negative electrode active material. The crystalline carbon may include at least one selected from the group consisting of fullerene, carbon nanotubes, and graphene.

The amorphous carbon may appropriately maintain the strength of the carbon layer to suppress expansion of the silicon oxide. The amorphous carbon may be a carbide of at least one material selected from the group consisting of tar, pitch, and other organic materials, or may be a carbon-based material formed by using hydrocarbon as a source of chemical vapor deposition.

The carbide of the other organic materials may be a carbide of an organic material selected from sucrose, glucose, galactose, fructose, lactose, mannose, ribose, aldohexose, ketohexose, and combinations thereof.

The hydrocarbon may be a substituted or unsubstituted aliphatic or alicyclic hydrocarbon or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane or the like. The aromatic hydrocarbon of the substituted or unsubstituted aromatic hydrocarbon may be benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment of the present invention, the carbon layer may be an amorphous carbon layer.

In an exemplary embodiment of the present invention, the carbon layer may be included in an amount of 0.1 to 50 parts by weight, 0.1 to 30 parts by weight, or 0.1 to 20 parts by weight based on 100 parts by weight of the total of the silicon oxide. More specifically, the carbon layer may be included in an amount of 0.5 to 15 parts by weight, 1 to 10 parts by weight, or 1 to 5 parts by weight. When the above range is satisfied, reduction in capacity and efficiency of the negative electrode active material can be prevented.

In an exemplary embodiment of the present invention, a thickness of the carbon layer may be 1 nm to 500 nm, and specifically 5 nm to 300 nm. When the above range is satisfied, the conductivity of the negative electrode active material is improved, the change in volume of the negative electrode active material is easily suppressed, and the side reaction between the electrolyte solution and the negative electrode active material is suppressed, thereby improving the initial efficiency and/or life of the battery.

Specifically, the carbon layer may be formed by chemical vapor deposition (CVD) using at least one hydrocarbon gas selected from the group consisting of methane, ethane and acetylene.

In the present invention, the crystallinity of the carbon layer can be confirmed by calculating the D/G band ratio according to Raman spectroscopy. Specifically, measurements can be made using a Renishaw 2000 Raman microscope system and 532 nm laser excitation, and using a 100x optical lens with a low laser power density and an exposure time of 30 seconds in order to avoid a laser heat effect. In order to reduce a deviation depending on position, a total of 25 points can be determined for a region of 5 $\mu$m x 5 $\mu$m, and fitted using the Lorentzian function. Thereafter, average values of the D band and G band can be calculated.

In an exemplary embodiment of the present invention, the average particle diameter ($D_{50}$) of the silicon oxide may be 1 $\mu$m or greater. Additionally, the average particle diameter of the silicon oxide may be 10 $\mu$m or less. For example, the average particle diameter ($D_{50}$) of the silicon oxide may be 1 $\mu$m or greater and 10 $\mu$m or less, 2 $\mu$m or greater and 10 $\mu$m or less, 3 $\mu$m or greater and 10 $\mu$m or less, 3 $\mu$m to 10 $\mu$m, 4 $\mu$m to 8 $\mu$m, or 5 $\mu$m to 8 $\mu$m.

Even when the silicon oxide is formed to have a small particle diameter of about 1 $\mu$m or greater and 10 $\mu$m or less, it can improve the life characteristics of the battery. For example, when the average particle diameter of the silicon oxide falls with the range of 1 $\mu$m or greater and 10 $\mu$m or less, the volume expansion and contraction rate due to the charge and discharge are reduced, so that the life performance can be improved. In addition, the specific surface area can be prevented from increasing excessively, thereby preventing side reactions with the electrolyte due to cycling and improving the life performance.

In an exemplary embodiment of the present invention, the negative electrode active material may further include graphite.

The graphite may be natural graphite, artificial graphite, or a mixture of natural graphite and artificial graphite.

In a case where the graphite is a mixture of natural graphite and artificial graphite, a weight ratio of natural graphite and artificial graphite may be 50:50 to 90:10, and specifically 60:40 to 80:20 or 65:35 to 75:25.

In an exemplary embodiment of the present invention, an average particle diameter ($D_{50}$) of the graphite may be 10 $\mu$m to 20 $\mu$m, and specifically, 15 $\mu$m to 20 $\mu$m. When the average particle diameter of graphite falls within the aforementioned range, the influence of particle agglomeration is reduced and the slurry dispersibility can be improved.

In an exemplary embodiment of the present invention, the positive electrode active material may include a lithium composite transition metal compound including nickel (Ni), cobalt (Co), and manganese (Mn).

In an exemplary embodiment of the present invention, the positive electrode active material may include nickel, cobalt, and manganese, and may further include aluminum.

In the present specification, the positive electrode active material may include 80 mol% or more and less than 100 mol% of nickel among metals except for lithium, and the lithium composite transition metal compound including 80 mol% or more and less than 100 mol% of nickel among metals except for lithium may include one species or a mixture of two or more species represented by Chemical Formula 1 below.

[Chemical Formula 1]  $Li_aNi_{1-b-c-d}Co_bMn_cQ_dO_{2+\delta}$

In the Chemical Formula, Q is any one or more elements selected from the group consisting of Na, K, Mg, Ca, Sr, Ni, Co, Ti, Al, Si, Sn, Mn, Cr, Fe, V and Zr, and $1\leq a\leq1.5$, $0<b\leq0.5$, $0<c\leq0.5$, $0\leq d\leq0.1$, $0<b+c+d\leq0.2$, and $-0.1\leq\delta\leq1.0$.

In the lithium composite transition metal compound of Chemical Formula 1, Li may be included in an amount corresponding to a, i.e., $1\leq a\leq1.5$. If a is less than 1, the capacity may be lowered, and if a exceeds 1.5, the particles are sintered in a firing process, making it difficult to manufacture the positive electrode active material. Considering the balance between the improvement in capacity characteristics of the positive electrode active material and the sinterability during the manufacturing of the active material according to the Li content control, Li may be more preferably included in an amount of $1.1\leq a\leq1.2$.

In the lithium composite transition metal compound of Chemical Formula 1, Ni may be included in an amount corresponding to 1-(b+c+d), for example, $0.8\leq1-(b+c+d)<1$. When the content of Ni in the lithium composite transition metal compound of Chemical Formula 1 is 0.8 or more, an amount of Ni enough to contribute to charge and discharge is secured and high capacity can be promoted. The content of Ni, 1-(b+c+d), may be 0.88 or more, preferably 0.9 or more, and more preferably 0.93 or more. Preferably, the content of Ni, 1-(b+c+d), may be 0.99 or less or 0.95 or less.

In the lithium composite transition metal compound of Chemical Formula 1, Co may be included in an amount corresponding to b, i.e., 0<b≤0.5. If the content of Co in the lithium composite transition metal compound of Chemical Formula 1 exceeds 0.5, there is a concern about cost increase. Considering the remarkable improvement effect in capacity characteristics according to the inclusion of Co, the Co may be more specifically included in a content of 0.03≤b≤0.2.

In the lithium composite transition metal compound of Chemical Formula 1, Mn may be included in a content corresponding to c, i.e., a content of 0<c≤0.5. If c in the lithium composite transition metal compound of Chemical Formula 1 exceeds 0.5, there is a concern that the output characteristics and capacity characteristics of the battery will instead deteriorate, and more specifically, Mn may be included in a content of 0.01≤c≤0.2.

In the lithium composite transition metal oxide of Chemical Formula 1, Q may be a doping element included in a crystal structure of the lithium composite transition metal compound, and Q may be included in a content corresponding to d, i.e., 0≤d≤0.1. Q may be one or two or more selected from Na, K, Mg, Ca, Sr, Ni, Co, Ti, Al, Si, Sn, Mn, Cr, Fe, V, and Zr, and for example, Q may be Al.

In an exemplary embodiment of the present invention, the lithium composite transition metal compound may include single particles.

In an exemplary embodiment of the present invention, the lithium composite transition metal compound may further include secondary particles.

The single particles may be manufactured by mixing and firing a transition metal precursor and a lithium source material. The secondary particles may be manufactured by a method different from that of the single particles, and the composition thereof may be the same as or different from that of the single particles.

For example, the firing is performed at a temperature at which single particles can be formed. To this end, the firing should be performed at a temperature higher than a temperature during manufacture of the secondary particles. For example, when the composition of the precursor is the same, the firing should be performed at a temperature about 30°C to 100°C higher than a temperature during manufacture of the secondary particles. The firing temperature for forming the single particles may vary depending on the metal composition in the precursor. For example, when forming single particles of a high-Ni NCM-based lithium composite transition metal oxide having a nickel (Ni) content of 80 mol% or more, the firing temperature may be about 700°C to 1000°C, and preferably about 800°C to 950°C. When the firing temperature satisfies the above range, a positive electrode active material including single particles having excellent electrochemical properties can be manufactured. If the firing temperature is below 790°C, a positive electrode active material including a lithium composite transition metal compound in the form of secondary particles may be manufactured, and if the firing temperature exceeds 950°C, excessive firing occurs and a layered crystal structure is not properly formed, so that the electrochemical properties may deteriorate.

In the present specification, the single particle is a term used to distinguish the same from typical secondary particles resulting from agglomeration of tens to hundreds of primary particles, and is a concept including a single particle consisting of one primary particle and a quasi-single particle form that is an agglomerate of 30 or less primary particles.

Specifically, in the present invention, the single particle may be a single particle consisting of one primary particle or a quasi-single particle form that is an agglomerate of 30 or less primary particles, and the secondary particle may be an agglomerate form of hundreds of primary particles.

In the present specification, the size of Si crystal grains included in the silicon oxide can be confirmed through X-ray diffraction analysis, and the X-ray diffraction analysis may be performed using an X-ray diffraction (XRD) analyzer (product name: D4-endavor, manufacturer: Bruker). Specifically, XRD measurement may be performed by sampling a powder-type sample on a holder and using Cu K alpha X-rays. The size of the Si crystal grains can be calculated by fitting the XRD results using the Scherrer equation, and in this case, the size of the crystal grains can be measured based on Si (220) ($2\theta$=47.5° to 48.5°).

In an exemplary embodiment of the present invention, the silicon oxide may have a Si crystal grain size of 0.1 nm or greater and 20 nm or less. Specifically, the Si crystal grain size may be 0.5 nm or greater and 15 nm or less, 1 nm or greater and 15 nm or less, 1.5 nm or greater and 12 nm or less, 1.5 nm or greater and 10 nm or less, 2 nm or greater and 10 nm or less, 3 nm or greater and 10 nm or less, or 4 nm or greater and 9 nm or less.

Such a crystal grain size enables ions to diffuse uniformly, thereby stably maintaining the structure of Si particles during charging and discharging. On the other hand, if the Si crystal grain size exceeds the above range, cracks can form in the particles due to stress caused by contraction/expansion of the Si material during charging and discharging, and Li ions cannot diffuse into the crystal grains, resulting in accelerated deterioration of the material due to reaction unevenness, which causes a reduction in cell life.

In the present specification, the size the crystal grains of the lithium composite transition metal compound may refer to, for example, the crystal size of the structure itself of Chemical Formula 1 above. In the present specification, the size of crystal grains of the lithium composite transition metal compound can be confirmed through X-ray diffraction analysis, and the X-ray diffraction analysis may be performed using an X-ray diffraction (XRD) analyzer (product name: D4-endavor, manufacturer: Bruker). Specifically, XRD measurement may be performed by sampling a powder-type sample on a holder and using Cu K alpha X-rays. The size of crystal grains of the lithium composite transition metal compound can be calculated by fitting the XRD results using the Scherrer equation, and in this case, the size of the crystal grains can be measured based on the largest peak appearing around $2\theta=10°$ to $12°$.

In an exemplary embodiment of the present invention, the lithium composite transition metal compound may have a crystal grain size of 70 nm or greater and 200 nm or less. Specifically, the crystal grain size may be 70 nm or greater and 180 nm or less, 70 nm or greater and 160 nm or less, or 80 nm or greater and 130 nm or less.

When the crystal grain size of the lithium composite transition metal compound falls within the above range, the lithium composite transition metal compound has excellent phase stability and can stably react with Li. On the other hand, if the crystal grain size of the lithium composite transition metal compound falls below the above range, the reaction with Li occurs for a long time, leading to reduced efficiency of the positive electrode. If the crystal grain size of the lithium composite transition metal compound exceeds the above range, particle breakage of the positive electrode active material occurs during the roll-pressing step of the electrode manufacturing process.

In an exemplary embodiment of the present invention, the Si crystal grain size of the silicon oxide may be 10% or less of the crystal grain size of the lithium composite transition metal compound. Specifically, the Si crystal grain size of the silicon oxide may be 0.5% or more and 10% or less, 1% or more and 10% or less, or 1% or more and 9.5% or less of the crystal grain size of the lithium composite transition metal compound. When the Si crystal grain size of the silicon oxide and the crystal grain size of the lithium composite transition metal compound satisfy the above relationship, the stress caused by the volume expansion of the negative electrode active material particles during charging and discharging can be reduced, which prevents the particle breakage. Furthermore, the negative electrode may deteriorate depending on the crystallinity of the silicon oxide, and in this case, some lithium ions may be consumed due to side reactions with the silicon oxide. However, the stable crystal structure provided by the relatively large crystal grain size of the positive electrode active material can facilitate electrochemical reactions even with a small amount of lithium (Li), leading to improved cycle characteristics and reduced swelling. That is, the consumption of lithium ions occurring during the intercalation and deintercalation can be minimized, and a certain level or higher of capacity can be maintained even with the reduced lithium ions due to consumption, thereby compensating for the overall deterioration of the battery cell.

On the other hand, even when the Si crystal grain size of the silicon oxide and the crystal grain size of the lithium composite transition metal compound satisfy the aforementioned grain sizes, if the Si crystal grain size of the silicon oxide exceeds 10% of the crystal grain size of the lithium composite transition metal compound, the degrees of cycle performance degradation and swelling may increase due to lithium (Li) remaining in the silicon oxide, and the cycle performance deteriorates due to cracks in the particles caused by an increase in the internal stress of Si during charging and discharging.

In an exemplary embodiment of the present invention, an average particle diameter ($D_{50}$) of the single particles may be 1 $\mu$m or greater. Additionally, the average particle diameter of the single particles may be 10 $\mu$m or less. For example, the average particle diameter of the single particles may be 1 $\mu$m or greater and 10 $\mu$m or less, 1 $\mu$m or greater and 8 $\mu$m or less, 1 $\mu$m or greater and 6 $\mu$m or less, greater than 1 $\mu$m and 6 $\mu$m or less, 2 $\mu$m or greater and 6 $\mu$m or less, or 3 $\mu$m or greater and 5 $\mu$m or less.

The single particles may exhibit excellent particle strength even if they are formed with a small particle diameter of about 1 $\mu$m or greater and 10 $\mu$m or less, and accordingly, the increase in micro-particles in an electrode due to particle breakage is alleviated, which can improve the life characteristics of the battery. For example, the single particle may have a particle strength of 100 to 300 MPa when roll-pressing with a force of 650 kgf/cm$^2$. Accordingly, even when the single particles are roll-pressed with a strong force of 650 kgf/cm$^2$, the increase in micro-particles in an electrode due to particle breakage is alleviated, which improves the life characteristics of the battery.

The method of forming the single particles is not particularly limited, but generally the single particles can be formed by over-firing with raised firing temperature, or may be manufactured by using additives such as grain growth promoters that help over-firing, or by changing a starting material.

The single particles have high intrinsic rigidity, exhibiting relatively excellent resistance to battery performance degradation, even when the electrode density is high. Therefore, the energy density can be increased by controlling the average particle diameter ranges of the single particles and the silicon oxide.

In an exemplary embodiment of the present invention, the average particle diameter of the single particles may be smaller than the average particle diameter of the silicon oxide.

When the average particle diameter of the single particles is smaller than the average particle diameter of the silicon oxide, the diffusion resistance of the single particles is relatively reduced, which can lead to improved life performance. That is, as the average particle diameter of the single particles increases, the diffusion resistance may increase. If the average particle diameter of the single particles is larger than the average particle diameter of the silicon oxide, lithium precipitation or the like may occur as the diffusion resistance relatively increases, which may deteriorate the battery performance and reduce the life performance.

In addition, when the average particle diameter of the single particles is smaller than the average particle diameter of the silicon oxide, side reactions with the electrolyte solution due to an increase in the specific surface area are prevented, which may lead to improved life performance.

According to an exemplary embodiment of the present invention, the average particle diameter of the single particles may be 0.1 $\mu$m to 5 $\mu$m smaller, specifically 1 $\mu$m to 3 $\mu$m smaller than the average particle diameter of the silicon oxide.

When the average particle diameter of the single particle is smaller than the average particle diameter of the silicon oxide, for example, when the above range is satisfied, the diffusion resistance of the single particles is relatively reduced, which can lead to improved life performance. That is, as the average particle diameter of the single particles increases, the diffusion resistance may increase. If the average particle diameter of the single particles is larger than the average particle diameter of the silicon oxide, lithium precipitation or the like may occur as the diffusion resistance relatively increases, which may deteriorate the battery performance and reduce the life performance.

In addition, when the average particle diameter of the single particles is smaller than the average particle diameter of the silicon oxide, for example, when the above range is satisfied, side reactions with the electrolyte solution due to an increase in the specific surface area are prevented, which may lead to improved life performance.

According to an exemplary embodiment of the present invention, a ratio of the average particle diameter of the single particles to the average particle diameter of the silicon oxide may be 1:1 to 1:2, for example, 1:1.1 to 1:2.

When the above range is satisfied, the diffusion resistance of the single particle is relatively reduced, which can lead to improved life performance. That is, as the average particle diameter of the single particles increases, the diffusion resistance may increase. If the average particle diameter of the single particles is larger than the average particle diameter of the silicon oxide, lithium precipitation or the like may occur as the diffusion resistance relatively increases, which may deteriorate the battery performance and reduce the life performance.

In addition, when the average particle diameter of the single particles is smaller than the average particle diameter of the silicon oxide, for example, when the above range is satisfied, side reactions with the electrolyte solution due to an increase in the specific surface area are prevented, which may lead to improved life performance.

In the exemplary embodiment of the present invention, the lithium composite transition metal compound further includes secondary particles, and the average particle diameter of the single particles is smaller than an average particle diameter of the secondary particles.

In the present invention, the single particle may be a single particle consisting of one primary particle or a quasi-single particle form that is an agglomerate of 30 or less primary particles, and the secondary particle may be an agglomerate form of hundreds of primary particles.

The above-described lithium composite transition metal compound may further include secondary particles. The secondary particle means a form formed by agglomeration of primary particles, and can be distinguished from the concept of a single particle including one primary particle, one single particle and a quasi-single particle form, which is an agglomerate of 30 or less primary particles.

The average particle diameter ($D_{50}$) of the secondary particles may be 1 $\mu$m to 20 $\mu$m, and specifically 2 $\mu$m to 17 $\mu$m, 3 $\mu$m to 15 $\mu$m, 5 $\mu$m to 15 $\mu$m, 7 $\mu$m to 15 $\mu$m, or 9 $\mu$m to 15 $\mu$m.

In an exemplary embodiment of the present application, the secondary particle is an agglomerate of primary particles, and the average particle diameter of the primary particles is 0.5 $\mu$m to 3 $\mu$m. Specifically, the secondary particle may be an aggregate form of hundreds of primary particles, and the average particle diameter of the primary particles may be 0.6 $\mu$m to 2.8 $\mu$m, 0.8 $\mu$m to 2.5um, or 0.8 $\mu$m to 1.5 $\mu$m.

When the average particle diameter of the primary particles falls within the above range, a single-particle positive electrode active material with excellent electrochemical properties can be formed. If the average particle diameter of the primary particles is too small, the number of agglomerates of primary particles forming lithium nickel-based oxide particles increases, reducing the effect of suppressing particle breakage during roll-pressing. If the average particle diameter of the primary particles is too large, a lithium diffusion path inside the primary particles may be lengthened, increasing a resistance and degrading an output characteristic.

In an exemplary embodiment of the present invention, the average particle diameter of the single particles may be smaller than the average particle diameter of the secondary particles. As a result, the single particles may have excellent particle strength even if they are formed with a small particle diameter, and accordingly, the increase in micro-particles in an electrode due to particle breakage is alleviated, which can improve the life characteristics of the battery.

In an exemplary embodiment of the present invention, the average particle diameter of the single particles is 1 $\mu$m to 18 $\mu$m smaller than the average particle diameter of the secondary particles.

For example, the average particle diameter of the single particles may be 1 $\mu$m to 16 $\mu$m smaller, 1.5 $\mu$m to 15 $\mu$m smaller, 2 $\mu$m to 14 $\mu$m smaller, or 5 $\mu$m to 8 $\mu$m smaller than the average particle diameter of the secondary particles.

When the average particle diameter of the single particles is smaller than the average particle diameter of the secondary particles, for example, when the above range is satisfied, the single particles may exhibit excellent particle strength even if they are formed with a small particle diameter, and accordingly, the increase in micro-particles in an electrode due to particle breakage is alleviated, which can improve the life characteristics and energy density of the battery.

In the lithium secondary battery according to the exemplary embodiment, the negative electrode active material may further include a carbon-based active material. Specifically, the carbon-based active material may be graphite. The graphite may be natural graphite, artificial graphite, or a mixture thereof.

In an exemplary embodiment of the present invention, the average particle diameter of the silicon oxide may be smaller than an average particle diameter of the graphite. When the average particle diameter of the silicon oxide is smaller than the average particle diameter of the graphite, the particle breakage is reduced due to a decrease in the volume expansion/contraction rate during charging and discharging, which leads to improved life performance of the battery.

According to an exemplary embodiment of the present invention, the average particle diameter of the silicon oxide may be 1 $\mu$m to 25 $\mu$m smaller than the average particle diameter of the graphite. For example, the average particle diameter of the silicon oxide may be 2 $\mu$m to 24 $\mu$m smaller, 3 $\mu$m to 23 $\mu$m smaller, 4 $\mu$m to 22 $\mu$m smaller, or 5 $\mu$m to 15 $\mu$m smaller than the average particle diameter of the graphite.

When the average particle diameter of the silicon oxide is smaller than the average particle diameter of the graphite, for example, when the above range is satisfied, the life performance of the battery is further improved.

In an exemplary embodiment of the present invention, when the average particle diameters of the secondary particles, the single particles, the graphite, and the silicon oxide included in the lithium secondary battery are denoted as A, B, C, and D, respectively, a relationship $B < D \leq A < C$ may be satisfied.

The exemplary embodiments of the secondary particles, the single particles, the graphite, and the silicon oxide are as described above.

When the average particle diameters of the secondary particles, the single particles, the graphite, and the silicon oxide are denoted as A, B, C and D, respectively, and a relationship $B < D \leq A < C$ is satisfied, the life performance of the battery is improved.

According to an exemplary embodiment of the present invention, the negative electrode active material further includes graphite, and when the average particle diameters of the single particles, the graphite, and the silicon oxide are denoted as B, C, and D, respectively, a relationship $B < D < C$ may be satisfied.

When the average particle diameters of the secondary particles, the single particles, and the silicon oxide are denoted as A, B, and D, respectively, a relationship $B < D \leq A$ may be satisfied.

When the average particle diameters of the secondary particles, the single particles, and the graphite are denoted as A, B, and C, respectively, a relationship $B < A < C$ may be satisfied.

When the average particle diameters of the secondary particles, the graphite, and the silicon oxide are denoted as A, C, and D, respectively, a relationship $D \leq A < C$ may be satisfied.

When the above ranges are satisfied, the life performance of the battery is improved.

In an exemplary embodiment of the present invention, in the lithium secondary battery according to the exemplary embodiment described above, the single particles are included in an amount of 15 to 100 parts by weight relative to 100 parts by weight of the positive electrode active material, and the silicon oxide is included in an amount of 3 to 30 parts by weight relative to 100 parts by weight of the negative electrode active material.

In an exemplary embodiment of the present application, the single particles are included in an amount of 15 to 100 parts by weight relative to 100 parts by weight of the positive electrode active material. The single particles may be included in an amount of 20 parts by weight to 100 parts by weight, or 30 parts by weight to 100 parts by weight based on 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more relative to 100 parts by weight of the positive electrode active material. For example, the single particles may be included in an amount of 100 parts by weight or less, 90 parts by weight or less, 80 parts by weight or less, 70 parts by weight or less, or 60 parts by weight or less relative to 100 parts by weight of the positive electrode active material.

When the single particles are included within the above range, excellent battery characteristics may be exhibited in combination with the negative electrode material described above. In particular, when the single particles are included in an amount of 15 parts by weight or more, the increase in micro-particles in an electrode due to particle breakage during the roll pressing after fabrication of an electrode is alleviated, which can improve the life characteristics of the battery.

In an exemplary embodiment of the present invention, the lithium composite transition metal compound may further include secondary particles, and the secondary particles may be included in an amount of 85 parts by weight or less relative to 100 parts by weight of the positive electrode active material. The secondary particles may be included in an amount of 80 parts by weight or less, 75 parts by weight or less, 70 parts by weight or less, or 60 parts by weight or less relative to 100 parts by weight of the positive electrode active material. The secondary particles may be included in an amount of 10 parts by weight or more, 20 parts by weight or more, 30 parts by weight or more, or 40 parts or more relative to 100 parts by weight of the positive electrode active material.

In an exemplary embodiment of the present invention, a weight ratio of the single particles and the secondary particles may be 1:9 to 9:1, 2:8 to 8:2, 3:7 to 7:3, or 4:6 to 6:4.

When the above range is satisfied, the above-described effects due to the existence of the single particles in the positive electrode active material can be maximized. In the case in which the positive electrode active material of the secondary particles is included, the components thereof may be the same as or different from those exemplified in the single-particle positive electrode active material described above, and may mean an agglomerate form of single particles.

In an exemplary embodiment of the present invention, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and even more preferably 98 parts by weight or more and 99.9 parts by weight or less.

According to an exemplary embodiment of the present invention, the positive electrode according to the exemplary embodiment described above further includes a positive electrode binder and a conductive material.

The positive electrode binder may serve to improve adhesion between particles of the positive electrode active material and adhesive force between particles of the positive electrode active material and the positive electrode current collector. For the positive electrode binder, those known in the art may be used. Non-limiting examples thereof may include polyvinylidene fluoride (PVDF), polyvinylidenefluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene monomer (EPDM), sulfonated-EPDM, styrene butadiene rubber (SBR), fluoro rubber, various copolymers thereof, and the like, and any one thereof alone or a mixture of two or more thereof may be used.

The positive electrode binder may be included in an amount of 0.1 part by weight or more and 50 parts by weight or less, for example, preferably 0.3 part by weight or more and 35 parts by weight or less, and more preferably 0.5 part by weight or more and 20 parts by weight or less on the basis of 100 parts by weight of the positive electrode active material layer.

The conductive material included in the positive electrode active material layer is used to impart conductivity to the electrode, and can be used without particular limitation as long as the conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

Specifically, in an exemplary embodiment, the conductive material may include one or more of a single-walled carbon nanotube (SWCNT) and a multi-walled carbon nanotube (MWCNT). The conductive material may be included in an amount of 0.1 part by weight or more and 2 parts by weight or less, for example, preferably 0.3 part by weight or more and 1.5 parts by weight or less, and more preferably 0.5 part by weight or more and 1.2 parts by weight or less on the basis of 100 parts by weight of the composition for a positive electrode active material layer.

According to the exemplary embodiment of the present application, the negative electrode active material layer includes 3 to 30 parts by weight of silicon oxide on the basis of 100 parts by weight of the total negative electrode active material. According to an exemplary embodiment, the negative electrode active material layer may include 3 to 20 parts by weight, or 3 to 13 parts by weight, preferably 5 to 10 parts by weight of silicon oxide on the basis of 100 parts by weight of the total negative electrode active material. Silicon oxide is used within the aforementioned range, so excellent battery characteristics may be exhibited in combination with the positive electrode material described above. In particular, when silicon oxide is included in an amount of 3 parts by weight or more, the effect of using the silicon oxide can be sufficiently exhibited. In addition, since silicon oxide has a high capacity, it may be difficult to balance the capacity with the positive electrode active material when used in excess. In particular, when silicon oxide is included in an amount of 30 parts by weight or less, expansion during charging and discharging can be prevented, which can lead to improved cycle characteristics.

According to an exemplary embodiment of the present invention, in the lithium secondary battery according to the exemplary embodiment, the negative electrode active material may further include a carbon-based active material. Specifically, the carbon-based active material may be graphite. The graphite may be natural graphite, artificial graphite, or a mixture thereof. The graphite may be included in an amount of 70 parts by weight or more and 97 parts by weight or less based on 100 parts by weight of the total negative electrode active material included in the negative electrode active material layer.

The graphite may be included in an amount of 75 parts by weight or more, 80 parts by weight or more, or 85 parts by weight or more, based on 100 parts by weight of the total negative electrode active material. The graphite may be included in an amount of 95 parts by weight or less, 93 parts by weight or less, or 90 parts by weight or less based on 100 parts by weight of the total negative electrode active material. When the graphite is a mixture of artificial graphite and natural graphite, the artificial graphite and natural graphite may be included in a ratio of 90:10 to 50:50 parts by weight, 85:15 to 60:40 parts by weight, or 80:20 to 65:35 parts by weight based on 100 parts by weight of the graphite.

In an exemplary embodiment of the present invention, a weight ratio of the carbon-based active material and the silicon oxide may be 0.1:99.9 to 30:70, 1:99 to 20:80, 5:95 to 20:80, 5:95 to 15:85, 8:92 to 12:88, or 10:90 to 12:88.

In an exemplary embodiment of the present invention, the negative electrode active material in 100 parts by weight of the negative electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and even more preferably 98 parts by weight or more and 99.9 parts by weight or less.

According to an exemplary embodiment of the present invention, in the lithium secondary battery according to the exemplary embodiment, the negative electrode active material layer may further include a negative electrode binder, in addition to the silicon oxide and the graphite.

The negative electrode binder may serve to improve adhesion between particles of the negative electrode active material and adhesive force between particles of the negative electrode active material and the negative electrode current collector. For the negative electrode binder, those known in the art may be used. Non-limiting examples thereof may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The negative electrode binder may be included in an amount of 0.1 part by weight or more and 50 parts by weight or less, for example, preferably 0.3 part by weight or more and 35 parts by weight or less, and more preferably 0.5 part by weight or more and 10 parts by weight or less based on 100 parts by weight of the negative electrode active material layer.

The negative electrode active material layer may not include a conductive material, but may further include a conductive material if necessary. The conductive material included in the negative electrode active material layer is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; fluorocarbon; metal powders such as aluminum, and nickel powders; a conductive whisker such as zinc oxide and potassium titanate; a conductive metal oxide such as titanium oxide; a conductive material such as polyphenylene derivative, and the like may be used. A content of the conductive material in the negative electrode active material layer may be 0.01 part by weight to 30 parts by weight, and preferably 0.03 part by weight to 25 parts by weight on the basis of 100 parts by weight of the negative electrode active material layer.

In an exemplary embodiment of the present invention, the positive electrode includes a positive electrode current collector and a positive electrode active material layer formed on the positive electrode current collector and including the positive electrode active material.

The positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 1 to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

In an exemplary embodiment of the present invention, the negative electrode includes a negative electrode current collector and a negative electrode active material layer formed on the negative electrode current collector and including the negative electrode active material.

The negative electrode current collector is not particularly limited as long as it has conductivity without causing a chemical change in the battery. For example, for the current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the current collector. A thickness of the current collector may be 1 $\mu$m to 500 $\mu$m. However, the thickness of the current collector is not limited thereto.

In an exemplary embodiment of the present invention, the positive electrode further includes a positive electrode active material layer including the positive electrode active material, the negative electrode further includes a negative electrode active material layer including the negative electrode active material, and thicknesses of the positive electrode and negative electrode active material layers are each 10 $\mu$m or greater and 500 $\mu$m or less. The thickness of the positive electrode active material layer may be 90% to 110%, for example, 95% to 105% of the thickness of the negative electrode active material layer, and the thicknesses may be the same. Specifically, the thicknesses of the positive electrode and negative electrode active material layers may be each 15 $\mu$m or greater and 400 $\mu$m or less, 20 $\mu$m or greater and 300 $\mu$m or less, 25 $\mu$m or greater and 200 $\mu$m or less, or 30 $\mu$m or greater and 100 $\mu$m or less.

In an exemplary embodiment of the present invention, the positive electrode further includes a positive electrode active material layer including the positive electrode active material, a loading amount per unit volume of the positive electrode active material layer is 250 mg/25 cm$^2$ to 900 mg/25cm$^2$, the negative electrode further includes a negative electrode active material layer including the negative electrode active material, and a loading amount per unit volume of the negative electrode active material layer is 100 mg/25 cm$^2$ to 600 mg/25 cm$^2$. Specifically, the loading amount per unit volume of the positive electrode active material layer may be 270 mg/25 cm$^2$ to 800 mg/25 cm$^2$, 285 mg/25 cm$^2$ to 700 mg/25 cm$^2$, or 300 mg/25 cm$^2$ to 600 mg/25 cm$^2$, and the loading amount per unit volume of the negative electrode active material layer may be 120 mg/25 cm$^2$ to 500 mg/25 cm$^2$, 135 mg/25 cm$^2$ to 400 mg/25cm$^2$, or 150 mg/25 cm$^2$ to 300 mg/25cm$^2$.

The positive electrode and the negative electrode can be manufactured according to a conventional method for manufacturing a positive electrode and a negative electrode, except using the positive electrode and negative electrode active materials described above. Specifically, the electrodes can be manufactured by applying a composition for active material layer formation, including the above-described active material and, optionally, a binder and a conductive material, onto a current collector, followed by drying and roll-pressing. In this case, the types and contents of the positive electrode and negative electrode active materials, the binder, and the conductive material are as described above. The solvent may be a solvent commonly used in the art, such as dimethyl sulfoxide (DMSO), isopropyl alcohol, N-methylpyrrolidone (NMP), acetone, or water, and any one thereof or a mixture of two or more thereof may be used. In consideration of an applied thickness of a slurry and a manufacturing yield, a use amount of the solvent is sufficient if it can dissolve or disperse the active material, the conductive material, and the binder, and then, allows for a viscosity capable of exhibiting excellent thickness uniformity when applied to manufacture a positive electrode and a negative electrode. Alternatively, the positive electrode and the negative electrode may be manufactured by laminating, on a current collector, a film obtained by casting the composition for active material layer formation on a separate support and peeling off it from the support.

The separator serves to separate the negative electrode and the positive electrode and to provide a migration path of lithium ions, in which any separator may be used without particular limitation as long as it is typically used as a separator in a secondary battery, and particularly, a separator having high moisture-retention ability for an electrolyte solution as well as a low resistance against migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolyte may include, but are not limited to, an organic liquid electrolyte, an inorganic liquid electrolyte, a solid polymer electrolyte, a gel-type polymer electrolyte, a solid inorganic electrolyte, or a molten-type inorganic electrolyte that may be used in manufacturing the lithium secondary battery.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, such a combined use may be more preferable.

A lithium salt may be used as the metal salt, and the lithium salt is a material that is readily soluble in the non-aqueous electrolyte solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3$ $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

The energy density of the lithium secondary battery according to an exemplary embodiment of the present invention may be 400 Wh/L to 900 Wh/L. Specifically, the energy density of the lithium secondary battery may be 425 Wh/L to 875 Wh/L, 450 Wh/L to 850 Wh/L, 475 Wh/L to 825 Wh/L, or 500 Wh/L to 800 Wh/L. When the above range is satisfied, the energy density of the lithium secondary battery designed in a limited space can be increased, and high-output performance and battery cycle performance can be improved.

The lithium secondary battery according to an exemplary embodiment of the present invention may be a cylindrical battery. The cylindrical battery may mean that a shape of the battery itself including an assembly including a positive electrode, a negative electrode, a separator, and an electrolyte is cylindrical, and specifically, may include a cylindrical can, a battery assembly provided inside the cylindrical can, and a top cap. However, the lithium secondary battery is not limited to this, and may be a prismatic battery or a pouch-type battery.

An exemplary embodiment of the present invention provides a battery module including the cylindrical battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Since the lithium secondary battery according to the embodiments of the present invention stably exhibits excellent discharge capacity, output characteristics, and cycle performance, the lithium secondary battery can be used as a power source of a portable device such as a mobile phone, a laptop computer, and a digital camera as well as a medium to large sized device selected from the group consisting of electric vehicles, hybrid electric vehicles, plug-in hybrid electric vehicles and power storage systems. For example, the battery module or battery pack may be used as a power source of a medium to large sized device of any one or more of a power tool; an electric vehicle including an electric vehicle (EV), a hybrid electric vehicle, and a plug-in hybrid electric vehicle (PHEV); or a power storage system.

Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Examples and Comparative Examples>**

**Example 1**

A composition for forming a positive electrode active material layer was prepared, including, on the basis of 100 parts by weight of the positive electrode active material layer, 98.04 parts by weight (single particles: secondary particles = 50:50 weight ratio) of a lithium composite transition metal compound serving as a positive electrode active material having contents of 93.3 mol% of Ni, 4.9 mol% of Co, and 1.8 mol% of Mn among metals except for lithium and including single particles and secondary particles, 1 part by weight of PVDF serving as a binder, and a CNT pre-dispersion solution including 0.8 part by weight of CNT serving as a conductive material and 0.16 part by weight of a dispersant.

The lithium composite transition metal compound having a crystal grain size of 110 nm was used, and the single particles were prepared with a size of $D_{50}$ = 3.57 $\mu$m and the secondary particles were prepared with a size of $D_{50}$ = 11.1 $\mu$m by an airflow pulverization method. An aluminum foil having a thickness of 30 $\mu$m was coated with the composition for forming a positive electrode active material layer so as to have a thickness of 103 $\mu$m in a dry state, and then dried to prepare a positive electrode.

A composition for forming a negative electrode active material layer was prepared, including, on the basis of 100 parts by weight of the negative electrode active material layer, 97.7 parts by weight of graphite (artificial graphite:natural graphite = 70:30 weight ratio, 90 parts by weight based on 100 parts by weight of the negative electrode active material) and silicon oxide (SiOx, x=0.9 to 1, the carbon coating amount and Mg doping amount based on 100 wt% of carbon-coated silicon oxide are listed in Table 1 below, 10 parts by weight based on 100 parts by weight of the negative electrode active material) serving as a negative electrode active material, 1.15 parts by weight of SBR (styrene-butadiene rubber) as a binder and 1 part by weight of CMC (carboxymethyl cellulose), and further including a CNT pre-dispersion solution including 0.09 part by weight of a dispersant and 0.06 part by weight of single-walled CNT.

The silicon oxide having a Si crystal grain size of 5 nm was used, and the silicon oxide was prepared with a size of $D_{50}$ = 5.2 $\mu$m, and the graphite was prepared with a size of $D_{50}$ = 17 $\mu$m by an airflow pulverization method. A copper foil having a thickness of 15 $\mu$m was coated with the composition for forming a negative electrode active material layer so as to have a thickness of 86 $\mu$m in a dry state, and then dried to prepare a negative electrode.

The negative electrode and the positive electrode were stacked with a separator interposed therebetween, and an electrolyte solution (1.0 M$LiPF_6$, ethylene carbonate (EC)/ethyl methyl carbonate (EMC)=30/70 (vol %), vinylene carbonate (VC) 1.5%) was injected to prepare a battery.

**Examples 2 to 4**

A lithium secondary battery was prepared in the same manner as in Example 1, except that positive electrode and negative electrode active materials were used, with the crystal grain sizes of the lithium composite transition metal compound, Si crystal grain sizes of silicon oxide, and particle diameters having the values described in Table 1 below.

**Comparative Examples 1 and 2**

A lithium secondary battery was prepared in the same manner as in Example 1, except that positive electrode and negative electrode active materials were used, with the crystal grain sizes of the lithium composite transition metal compound, Si crystal grain sizes of silicon oxide, and particle diameters having the values described in Table 1 below.

The configurations of the positive electrode active materials and negative electrode active materials prepared in the Examples and the Comparative Examples are shown in Table 1 below.

[Table 1]

| | Crystal grain | | | Positive electrode active material | | | | Negative electrode active material | | | | | |
|---|---|---|---|---|---|---|---|---|---|---|---|---|---|
| | Crystal grain size (A) (nm) of lithium composite transition metal compound | Si crystal grain size (B) (nm) of silicon oxide | Ratio of B to A (%) | Single particle $D_{50}$ (µm) | Single particle content (wt%) | Secondary particle $D_{50}$ (µm) | Secondary particle Content (wt%) | Silicon oxide $D_{50}$ (µm) | Silicon oxide content (wt%) | $D_{50}$ of graphite (µm) | Graphite content (wt%) | Mg doping amount (wt%) in silicon oxide | carbon coating amount (wt%) on silicon oxide |
| Example 1 | 110 | 5 | 4.54 | 3.57 | 50 | 11.1 | 50 | 5.2 | 10 | 17 | 90 | 6.2 | 5 |
| Example 2 | 88 | 5 | 6.25 | 3.63 | 50 | 10.5 | 50 | 5.7 | 10 | 17 | 90 | 6.2 | 5 |
| Example 3 | 110 | 9 | 8.18 | 3.63 | 50 | 9.5 | 50 | 6.2 | 10 | 17 | 90 | 7.5 | 3.5 |
| Example 4 | 110 | 11 | 10 | 3.57 | 50 | 9.5 | 50 | 5.9 | 10 | 17 | 90 | 8 | 4.5 |

| | | | | | | | | | | | | | |
|---|---|---|---|---|---|---|---|---|---|---|---|---|---|
| Comparative Example 1 | 83 | 9 | 11.25 | 3.52 | 50 | 12.5 | 50 | 6.2 | 10 | 17 | 90 | 7.5 | 3.5 |
| Comparative Example 2 | 100 | 11 | 13.75 | 3.52 | 50 | 12.5 | 50 | 5.9 | 10 | 17 | 90 | 8 | 4.5 |

The sizes of the crystal grains of the lithium composite transition metal compound and the Si crystal grains in the silicon oxide can be confirmed through X-ray diffraction analysis, and the X-ray diffraction analysis was performed using an X-ray diffraction (XRD) analyzer (product name: D4-endavor, manufacturer: Bruker) Specifically, XRD measurement was performed by sampling a powder-type sample on a holder and using Cu K alpha X-rays.

The crystal grain size of the lithium composite transition metal compound was calculated by fitting the XRD results using the Scherrer equation, and in this case, the size of the crystal grains was measured based on the peak appearing at the corresponding position ($2\theta=10°$ to $12°$).

The Si crystal grain size was calculated by fitting the XRD results using the Scherrer equation, and in this case, the size of the crystal grains was measured based on Si (220) ($2\theta = 47.4°$ to $48.5°$).

The $D_{50}$ of the positive electrode and negative electrode active materials was analyzed by a PSD measurement method using a Microtrac apparatus.

<Experimental Example: Evaluation of Discharge Capacity, Initial Efficiency, and Life (capacity retention rate) Characteristics>

The lithium secondary batteries prepared in the Examples and Comparative Examples were charged and discharged to evaluate discharge capacity, initial efficiency, and capacity retention rate, and the evaluation results are shown in Table 2 below.

The charging and discharging were performed at 0.1 C for the first cycle and the second cycle, and the charging and discharging were performed at 0.5 C from the third cycle to the 199th cycle. At the 200th cycle, the charging and discharging were terminated in a charge state (with lithium contained in the negative electrode).

Charging conditions: CC (constant current)/CV (constant voltage) (5 mV/0.005 C current cut-off)
Discharging conditions: CC (constant current) condition 1.5V

The discharge capacity (mAh/g) and the initial efficiency (%) were derived from the result after charging and discharging once. Specifically, the initial efficiency (%) was derived by the following calculation.

Initial efficiency (%) = (first time discharge capacity/first time charge capacity) $\times$ 100%

The capacity retention rate was derived by the following calculation.

Capacity retention rate (%) = (199th time discharge capacity/first time discharge capacity) $\times$ 100%

<Experimental Example: Cell Thickness Evaluation>

The thicknesses of the prepared secondary batteries were compared before and after the cycle was performed as follows.

The charging and discharging were performed at 0.1 C for the first cycle and the second cycle, and the charging and discharging were performed at 0.5 C from the third cycle to the 200th cycle. The thickness of the cell after 2 cycles was taken as Initial thickness, and the thickness of the cell after 200 cycles was taken as After thickness, and the thickness was calculated using the following formula. The calculated cell thickness of Example 1 was set to 100%, and the cell thicknesses of Examples 2 to 4 and Comparative Examples 1 and 2 were relatively calculated based on the set thickness and are listed in Table 2 below.

Cell thickness = (After thickness - Initial thickness) / (Initial thickness) $\times$ 100%

[Table 2]

| Battery | Discharge capacity (mAh/g) | Initial efficiency (%) | Capacity retention rate (200 cycles at room temperature, %) | Cell thickness (based on Example 1) (200 cycles at room temperature, %) |
|---|---|---|---|---|
| Example 1 | 492 | 95.2 | 92.2 | 100 |
| Example 2 | 492 | 94.5 | 91.8 | 110 |
| Example 3 | 492 | 93.1 | 91.5 | 107 |
| Example 4 | 492 | 91.5 | 91.2 | 113 |
| Comparative Example 1 | 492 | 89.8 | 88.2 | 117 |
| Comparative Example 2 | 492 | 89.5 | 86.3 | 125 |

According to Tables 1 and 2, it was confirmed that the secondary batteries of Examples 1 to 4, in which the Si crystal grain size of the silicon oxide satisfies 10% or less of the crystal grain size of the lithium composite transition metal compound, have smaller cell thicknesses and exhibit superior capacity retention rates compared to Comparative Examples 1 and 2. This appears to be because the Si crystal grain size of the silicon oxide is 10% or less of the crystal grain size of the lithium composite transition metal compound, so the stress caused by the volume expansion of the negative electrode active material particles during charging and discharging can be reduced, thereby reducing the particle breakage, improving the cycle characteristics, and reducing swelling.

On the other hand, in Comparative Examples 1 and 2 in which the Si crystal grain size of the silicon oxide exceeded 10% of the crystal grain size of the lithium composite transition metal compound, it was confirmed that cracks formed in the particles due to an increase in the internal stress of Si during charging and discharging, resulting in a deterioration in cycle performance.

**Claims**

1. A lithium secondary battery comprising:

   a positive electrode comprising a positive electrode active material;
   a negative electrode comprising a negative electrode active material;
   a separator provided between the positive electrode and the negative electrode; and
   an electrolyte,
   wherein the positive electrode active material comprises a lithium composite transition metal compound comprising nickel (Ni), cobalt (Co), and manganese (Mn),
   wherein the lithium composite transition metal compound comprises a single particle,
   wherein the negative electrode active material comprises a silicon oxide, and
   wherein a Si crystal grain size of the silicon oxide is 10% or less of a crystal grain size of the lithium composite transition metal compound.

2. The lithium secondary battery of claim 1, wherein the Si crystal grain size of the silicon oxide is 0.1 nm or greater and 20 nm or less.

3. The lithium secondary battery of claim 1, wherein the crystal grain size of the lithium composite transition metal compound is 70 nm or greater and 200 nm or less.

4. The lithium secondary battery of claim 1, wherein the lithium composite transition metal compound further comprises a secondary particle.

5. The lithium secondary battery of claim 1, wherein the negative electrode active material further comprises graphite.

6. The lithium secondary battery of claim 1, wherein an average particle diameter of the single particle is 1 $\mu$m or greater and 10 $\mu$m or less.

7. The lithium secondary battery of claim 1, wherein an average particle diameter of the silicon oxide is 1 $\mu$m or greater

and 10 μm or less.

8. The lithium secondary battery of claim 1, wherein an average particle diameter of the single particle is smaller than an average particle diameter of the silicon oxide.

9. The lithium secondary battery of claim 5, wherein an average particle diameter of the silicon oxide is smaller than an average particle diameter of the graphite.

10. The lithium secondary battery of claim 1, wherein the single particle is included in an amount of 15 to 100 parts by weight relative to 100 parts by weight of the positive electrode active material, and
wherein the silicon oxide is included in an amount of 3 to 30 parts by weight relative to 100 parts by weight of the negative electrode active material.

11. The lithium secondary battery of claim 1, wherein the lithium composite transition metal compound comprises 80 mol% or more of nickel among metals except for lithium.

12. The lithium secondary battery of claim 1, wherein the positive electrode further comprises a positive electrode active material layer comprising the positive electrode active material,

wherein the negative electrode further comprises a negative electrode active material layer comprising the negative electrode active material, and
wherein thicknesses of the positive electrode and negative electrode active material layers are each 10 μm or greater and 500 μm or less.

13. A battery module comprising the lithium secondary battery of any one of claims 1 to 12.

14. A battery pack comprising the lithium secondary battery of any one of claims 1 to 12.

15. A battery pack comprising the battery module of claim 13.

## INTERNATIONAL SEARCH REPORT

| | International application No. |
|---|---|
| | **PCT/KR2024/011906** |

| A. | CLASSIFICATION OF SUBJECT MATTER |
|---|---|

**H01M 10/052**(2010.01)i; **H01M 4/525**(2010.01)i; **H01M 4/48**(2010.01)i; **H01M 4/587**(2010.01)i; **H01M 4/131**(2010.01)i; **H01M 4/38**(2006.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 10/052(2010.01); H01M 10/0525(2010.01); H01M 4/131(2010.01); H01M 4/133(2010.01); H01M 4/134(2010.01); H01M 4/48(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 음극 활물질(anode active material), 양극 활물질(cathode active material), 결정립 크기(grain size), 단입자(single particle), 실리콘(silicon)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2021-0019389 A (LG CHEM, LTD.) 22 February 2021 (2021-02-22)<br>See claims 1, 7 and 10; and paragraphs [0103], [0105], [0109], [0119], [0121], [0130] and [0139]. | 1-15 |
| A | US 2018-0269519 A1 (LG CHEM, LTD.) 20 September 2018 (2018-09-20)<br>See abstract; claim 1; paragraphs [0022], [0035]-[0037], [0042], [0043], [0134], [0137], [0148]-[0150] and [0179]; and table 1. | 1-15 |
| A | US 2015-0243982 A1 (SANYO ELECTRIC CO., LTD.) 27 August 2015 (2015-08-27)<br>See abstract; and paragraphs [0049], [0088] and [0089]. | 1-15 |
| A | KR 10-2021-0000983 A (SAMSUNG SDI CO., LTD.) 06 January 2021 (2021-01-06)<br>See claims 1-17. | 1-15 |
| A | KR 10-2021-0007273 A (SAMSUNG SDI CO., LTD.) 20 January 2021 (2021-01-20)<br>See claims 1-20. | 1-15 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 November 2024** | **28 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/011906**

| Patent document cited in search report | | | Publication date (day/month/year) | Patent family member(s) | | | Publication date (day/month/year) |
|---|---|---|---|---|---|---|---|
| KR | 10-2021-0019389 | A | 22 February 2021 | CN | 113474912 | A | 01 October 2021 |
| | | | | KR | 10-2459883 | B1 | 28 October 2022 |
| | | | | US | 2022-0140320 | A1 | 05 May 2022 |
| | | | | WO | 2021-029652 | A1 | 18 February 2021 |
| US | 2018-0269519 | A1 | 20 September 2018 | CN | 107925067 | A | 17 April 2018 |
| | | | | CN | 107925067 | B | 23 March 2021 |
| | | | | EP | 3382779 | A1 | 03 October 2018 |
| | | | | EP | 3382779 | B1 | 22 May 2019 |
| | | | | KR | 10-1977931 | B1 | 13 May 2019 |
| | | | | KR | 10-2017-0069163 | A | 20 June 2017 |
| | | | | US | 10511048 | B2 | 17 December 2019 |
| US | 2015-0243982 | A1 | 27 August 2015 | CN | 104603996 | A | 06 May 2015 |
| | | | | CN | 104603996 | B | 12 April 2017 |
| | | | | JP | 2017-103166 | A1 | 12 January 2017 |
| | | | | JP | 6174047 | B2 | 02 August 2017 |
| | | | | US | 10714748 | B2 | 14 July 2020 |
| | | | | US | 2018-0198122 | A1 | 12 July 2018 |
| | | | | US | 9947924 | B2 | 17 April 2018 |
| | | | | WO | 2014-103166 | A1 | 03 July 2014 |
| KR | 10-2021-0000983 | A | 06 January 2021 | KR | 10-2510890 | B1 | 16 March 2023 |
| | | | | US | 2020-0411844 | A1 | 31 December 2020 |
| KR | 10-2021-0007273 | A | 20 January 2021 | US | 2021-0013493 | A1 | 14 January 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230105599
- KR 1020110112215